# EUROPEAN PATENT APPLICATION

(11) **EP 3 605 337 A1**
(43) Date of publication of application: **05.02.2020**
(21) Application number: 18770769.0
(22) Date of filing: 11.01.2018
(51) Int. Cl.: G06F 11/32

(54) **METHOD AND TERMINAL FOR DISPLAYING CHARGING INFORMATION**

(30) Priority: 24.03.2017 CN 201710182051
(71) Applicant: ZTE Corporation, Shenzhen, Guangdong 518057 (CN)
(72) Inventor: CHENG, Fei, Shenzhen Guangdong 518057 (CN)
(74) Representative: Petraz, Gilberto Luigi
(86) International application number: PCT/CN2018/072264
(87) International publication number: WO 2018/171301

(57) **Abstract**

Disclosed is a method and a terminal for displaying charging information. The method includes: after a terminal in a power-off state detects a connection between itself and a charging power supply, obtaining battery charging information of the terminal (S410), and displaying the battery charging information of the terminal according to a preset display strategy, which is used for displaying the battery charging information of the terminal before the operating system of the terminal is initialized (S420).

## Description

### Field of the Invention

The present disclosure relates to, but is not limited to, the technical field of terminals, and in particular, to a method and a terminal for displaying charging information.

### Background of the Invention

Terminals such as smartphones, tablet computers, and so on have become indispensable mobile devices in people's daily work and life. These devices are all powered by batteries, and under the condition that a terminal is not connected to a charging power supply, the battery power of the terminal decreases with the continuous operation of the terminal, and moreover when the battery power of the terminal reaches a power-off threshold, the terminal will automatically shut down. At this time, if a terminal in a power-off state is detected to be connected to the charging power supply, a power-off charging mode will be started. The so-called startup of the power-off charging mode refers to a process of the terminal from connecting to the charging power supply to displaying a power-off charging UI (User Interface) for the first time, where in the main function of the power-off charging UI is to indicate the battery charging information of the terminal.

### Summary of the Invention

The following is a summary of the subject matter described in detail in this disclosure, and this summary is not intended to limit the protection scope of the claims.

Embodiments of the present disclosure expect to provide a method and a terminal for displaying charging information, which can shorten the time of the terminal from connecting to the charging power supply to displaying the battery charging information of the terminal, by controlling the startup process of the power-off charging mode of the terminal.

The embodiments of the present disclosure are implemented as follows:
In a first aspect, the embodiments of the present disclosure provide a method for displaying charging information, the method comprising:
after a terminal in a power-off state detects a connection between itself and a charging power supply, obtaining the battery charging information of the terminal;
displaying the battery charging information of the terminal according to a preset display strategy, which is used for displaying the battery charging information of the terminal before the operating system of the terminal is initialized.

In the above solution, said obtaining the battery charging information of the terminal comprises:
initializing an underlying resource of the terminal;
after initializing the underlying resource of the terminal, initializing a power management of the battery of the terminal;
after initializing the power management of the battery of the terminal, obtaining the current the charging information of the terminal from the power management of the battery of the terminal.

In the above solution, said initializing an underlying resource of the terminal comprises:
initializing a Clock, a Random Access Memory (RAM) and a Power Management Integrated Circuit (PMIC) of the terminal.

In the above solution, said initializing a power management of the battery of the terminal comprises:
initializing a charging chip and a voltameter chip of the battery of the terminal.

In the above solution, said the battery charging information of the terminal comprises a current charging state and a current electric quantity of the battery of the terminal;
correspondingly, said obtaining the battery charging information of the terminal from the power management of the battery of the terminal comprises:
obtaining the battery charging state of the terminal from the charging chip of the battery of the terminal, and obtaining the current electric quantity of the battery of the terminal from the voltameter chip of the battery of the terminal

In the above solution, said displaying the battery charging information of the terminal according to a preset display strategy comprises:
initializing a screen of the terminal;
after initializing the screen of the terminal, displaying the battery charging information of the terminal through the screen of the terminal, and periodically refreshing the battery charging information of the terminal displayed on the screen of the terminal.

In a second aspect, the embodiments of the present disclosure provide a terminal, the terminal comprising: a charging information obtaining module and a charging information display module, wherein
the charging information obtaining module is configured to obtain the battery charging information of the terminal;
the charging information display module is configured to display the battery charging information of the terminal according to a preset display strategy, which is used for displaying the battery charging information of the terminal before the operating system of the terminal is initialized.

In the above solution, said charging information obtaining module comprises: an underlying resource initialization sub-module, a battery power management initialization sub-module and a charging information obtaining sub-module, wherein
the underlying resource initialization sub-module is configured to initialize an underlying resource of the terminal;
the battery power management initialization sub-module is configured to initialize a power management of the battery of the terminal after initializing the underlying resource of the terminal;
the charging information obtaining sub-module is configured to obtain the battery charging information of the terminal from the power management of the battery of the terminal after initializing the power management of the battery of the terminal.

In the above solution, said underlying resource initialization sub-module is configured to:
initialize a Clock, a Random Access Memory (RAM) and a Power Management Integrated Circuit (PMIC) of the terminal.

In the above solution, said battery power management initialization sub-module is configured to:
initialize a charging chip and a voltameter chip of the battery of the terminal.

In the above solution, said the battery charging information of the terminal comprises a current charging state and a current electric quantity of the battery of the terminal;
correspondingly, said charging information obtaining sub-module is configured to:
obtain the current charging state of the battery of the terminal from the charging chip of the battery of the terminal, and obtain the current electric quantity of the battery of the terminal from the voltameter chip of the battery of the terminal.

In the above solution, said charging information display module is configured to:
initialize a screen of the terminal;
after initializing the screen of the terminal, display the battery charging information of the terminal through the screen of the terminal, and periodically refresh the battery charging information of the terminal displayed on the screen of the terminal.

The embodiments of the present disclosure provide a method and a terminal for displaying charging information, and the method can display the battery charging information of the terminal according to a preset display strategy before the operating system of the terminal is initialized, so that a terminal in a power-off state does not need to wait until the power-off charging UI built in the terminal is called before displaying the battery charging information of the terminal, thus greatly shortening the boot time of the terminal from connecting to the charging power supply to displaying the battery charging information of the terminal.

After reading and understanding the accompanying drawings and detailed descriptions, other aspects can be understood.

### Brief Description of the Drawings

Fig. 1 is a schematic diagram of the startup process of a power-off charging mode provided by an embodiment of the present disclosure;
Fig. 2 is a schematic flow diagram of high-pass initialization provided by an embodiment of the present disclosure;
Fig. 3 is a schematic flow diagram of an original equipment manufacturer initialization provided by an embodiment of the present disclosure;
Fig. 4 is a schematic diagram of a method for displaying charging information provided by an embodiment of the present disclosure;
Fig. 5 is a schematic flow diagram of remaining initialization provided by an embodiment of the present disclosure;
Fig. 6 is a schematic diagram of an implementation process of a method for displaying charging information provided by an embodiment of the present disclosure;
Fig. 7 is a screen diagram showing the battery charging information of a terminal provided by an embodiment of the present disclosure;
Fig. 8 is a schematic diagram of an implementation process of another method for displaying charging information provided by an embodiment of the present disclosure;
Fig. 9 is another screen diagram showing the battery charging information of a terminal provided by an embodiment of the present disclosure;
Fig. 10 is a schematic structural diagram of a terminal provided by an embodiment of the present disclosure;
Fig. 11 is a schematic structural diagram of another terminal provided by an embodiment of the present disclosure; and
Fig. 12 is a schematic structural diagram of a device for displaying charging information provided by an embodiment of the present disclosure.

### Detailed Description of the Embodiments

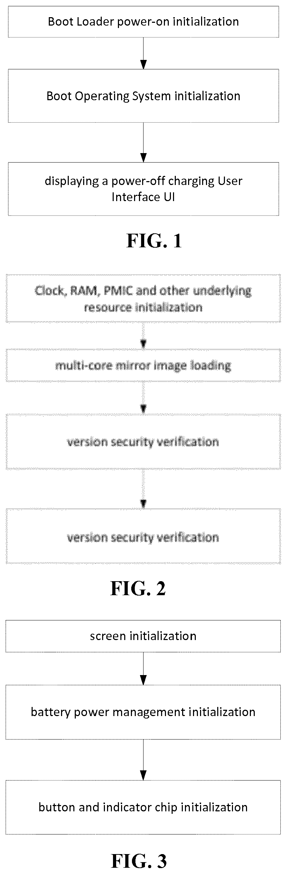

As shown in Fig. 1, the startup process of the power-off charging mode mainly comprises: Boot Loader power-on initialization, Boot Operating System initialization, and displaying a power-off charging UI. In a specific implementation, the current charging state of a terminal in a power-off state needs to be displayed through a power-off charging UI, so that a user can know the current charging information of the terminal through the power-off charging UI displayed on the terminal. While the loading of the power-off charging UI, that is, the startup of the power-off charging mode, needs to go through three stages: Boot Loader power-on initialization, Boot Operating System initialization, and displaying a power-off charging UI, and before completing the startup of the power-off charging mode, the user cannot perceive the current charging information of the terminal. Taking a smartphone as an example, in general, it takes 5 to 10 seconds for the smartphone in the power-off state to complete the startup of the power-off charging mode, that is to say, the user needs to wait 5 to 10 seconds from inserting a charger into the phone to knowing the battery charging information of the phone battery.

In the above startup process of the power-off charging mode of the terminal, the Boot Loader power-on initialization is a system primary boot program, and needs to load a boot program, which is mainly used to initialize the underlying hardware of the terminal and related peripheral resources, such as a Clock, a Random Access Memory (RAM), a Power Management Integrated Circuit (PMIC), a screen, a button, battery power management, an indicator chip, and so on. In addition, the process of the Boot Loader power-on initialization can be functionally divided into high-pass initialization and Original Equipment Manufacturer (OEM) initialization. The high-pass initialization process can be seen in Fig. 2. As can be seen from Fig. 2, the high-pass initialization process mainly comprises: Clock, RAM, PMIC and other underlying resources initialization, multi-core mirror image loading, version security verification and high-pass platform initialization. The OEM initialization process can be seen in Fig. 3. As can be seen from Fig. 3, the OEM initialization process mainly comprises: screen initialization, battery power management initialization, button and indicator chip initialization.

The Boot Operating System initialization is mainly responsible for loading the operating system carried by the terminal, such as Android system, Linux system and iOS system, etc., mainly including the loading of the kernel driver (i.e. kernel initialization) and the startup of the upper layer process (i.e. user space initialization). While displaying the power-off charging UI is the final stage of the startup process of the power-off charging mode, that is to say, the terminal finally informs the user of the battery charging information of the terminal by displaying the power-off charging UI. Taking a high-pass platform as an example, the process of the Boot Loader power-on initialization takes 4 seconds, and the process of the Boot Operating System initialization takes 6 seconds, and thus it takes 10 seconds to complete the startup of the power-off charging mode of the terminal, that is, after a user connects the terminal to the charging power supply, the user needs to wait for 10 seconds before obtaining the battery charging information of the terminal. In the following, the embodiments of the present disclosure will be described clearly and completely in conjunction with the accompanying drawings in the embodiments of the present disclosure.

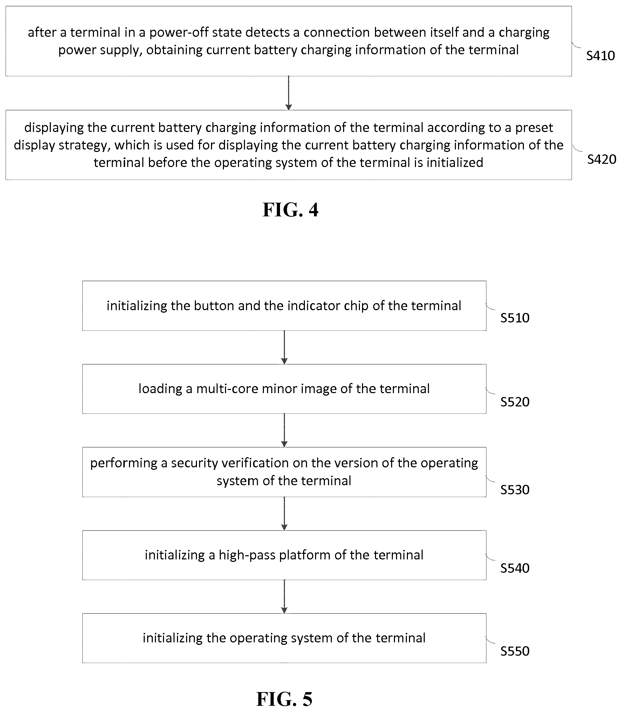

As shown in Fig. 4, the figure shows a method for displaying charging information provided by an embodiment of the present disclosure. As can be seen from the figure, the method may comprise:
at S410, after a terminal in a power-off state detects a connection between itself and a charging power supply, obtaining the battery charging information of the terminal;
at S420, displaying the battery charging information of the terminal according to a preset display strategy, which is used for displaying the battery charging information of the terminal before an operating system of the terminal is initialized.

Here, the operating system of the terminal comprises: an Android system, a Linux system and an iOS system.

Exemplarily, for step S410, said obtaining the battery charging information of the terminal may comprise:
at S4101, initializing an underlying resource of the terminal;
optionally, said initializing an underlying resource of the terminal may comprise: initializing a Clock, a Random Access Memory(RAM) and a Power Management Integrated Circuit (PMIC) of the terminal;
at S4102, after initializing the underlying resource of the terminal, initializing a power management of the battery of the terminal;
optionally, said initializing a power management of the battery of the terminal may comprise: initializing a charging chip and a voltameter chip of the battery of the terminal;
at S4103, after initializing the power management of the battery of the terminal, obtaining the battery charging information of the terminal from the power management of the battery of the terminal.

Here, said the battery charging information of the terminal may comprise: a current charging state and a current electric quantity of the battery of the terminal. Correspondingly, for step S4103, said obtaining the battery charging information of the terminal from the power management of the battery of the terminal may comprise: obtaining the current charging state of the battery of the terminal from the charging chip of the battery of the terminal, and obtaining the current electric quantity of the battery of the terminal from the voltameter chip of the battery of the terminal.

Exemplarily, for step S420, said displaying the battery charging information of the terminal according to a preset display strategy may comprise:
at S4201, initializing a screen of the terminal;
at S4202, after initializing the screen of the terminal, displaying the battery charging information of the terminal through the screen of the terminal, and periodically refreshing the battery charging information of the terminal displayed on the screen of the terminal.

In fact, after initializing the screen of the terminal, displaying the battery charging information of the terminal through the screen of the terminal means that the display of the battery charging information of the terminal is realized before the initialization of the operating system of the terminal. However, in order to more truly reflect the battery charging information of the terminal, it is also possible to periodically refresh the battery charging information of the terminal being displayed on the screen of the terminal, so that the picture displayed on the screen of the terminal can reflect the battery charging information of the terminal in real time.

Here, it should also be noted that after the terminal in the power-off state is connected to a charging power supply, a complete power-off charging mode startup process comprises three stages: Boot Loader power-on initialization, Boot Operating System initialization, and displaying a power-off charging UI. Therefore, in a specific implementation, after the screen of the terminal is initialized, as shown in Fig. 5, the following steps are sequentially included:
at S510, initializing the button and the indicator chip of the terminal;
here, after initializing the button of the terminal, the terminal can detect whether a button event has occurred; when the terminal detects that a button event occurs, it obtains the duration of the button event, and when the duration of the button event reaches a preset time threshold, the terminal is turned on;
at S520, loading a multi-core mirror image of the terminal;
at S530, performing a security verification on the version of the operating system of the terminal;
at S540, initializing a high-pass platform of the terminal;
at S550, initializing an operating system of the terminal.

Here, for step S550, said initializing the operating system of the terminal may comprise the following steps:
at S5501, initializing a kernel of the terminal;
at S5502, after initializing the kernel of the terminal, enabling a preset timer in the kernel of the terminal;
at S5503, after enabling the timer, calling the power-off charging user interface UI built in the terminal;
here, in a specific implementation, after enabling the timer, it is possible to use the timer to periodically obtain the battery charging information of the terminal from the power management of the battery of the terminal, and to further use the current battery charging information of the terminal to refresh the power-off charging UI built in the terminal; at this point, the terminal can jump from displaying the battery charging information of the terminal to the power-off charging UI built in the terminal according to a preset display strategy, that is, can display the battery charging information of the terminal in real time through a charging UI built in the terminal;
at S5504, after calling the power-off charging UI built in the terminal, initializing the user space of the terminal.

In order to shorten the time of a terminal from connecting to the charging power supply to displaying the current charging information of the battery of terminal, the embodiment of the present disclosure provides a method for displaying charging information. In the method, by adjusting the initialization sequence in the startup process of a power-off charging mode, that is, initializing the power supply management and the terminal screen of the terminal battery in advance, after the initialization of the hardware is completed, the battery charging information of the terminal is obtained immediately, and the battery charging information of the terminal is displayed through the screen of the terminal.

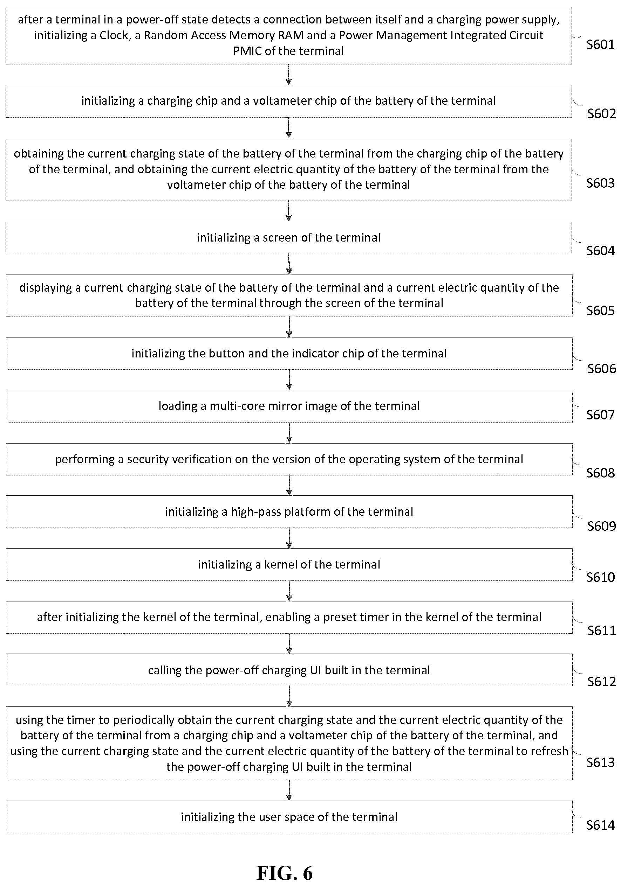

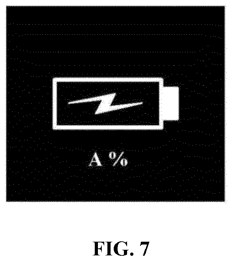

In order to facilitate the understanding of the above embodiment, as shown in Fig. 6, the figure shows a complete implementation process of displaying charging information. As can be seen from the figure, the implementation process comprises the following implementation steps:
at S601, after a terminal in a power-off state detects a connection between itself and a charging power supply, initializing a Clock, a Random Access Memory RAM and a Power Management Integrated Circuit PMIC of the terminal;
at S602, initializing a charging chip and a voltameter chip of the battery of the terminal;
at S603, obtaining the current charging state of the battery of the terminal from the charging chip of the battery of the terminal, and obtaining the current electric quantity of the battery of the terminal from the voltameter chip of the battery of the terminal;
at S604, initializing a screen of the terminal;
at S605, displaying a current charging state of the battery of the terminal and a current electric quantity of the battery of the terminal through the screen of the terminal;
at this point, as shown in Fig. 7, the user can know the current charging state of the battery of the terminal and the current electric quantity of the battery of the terminal through the screen of the terminal, without waiting for the terminal to perform the following steps S606 to S613, and then seeing the current charging state of the battery of the terminal and the current electric quantity of the battery of the terminal through the power-off charging UI built in the terminal;
at S606, initializing the button and the indicator chip of the terminal;
at S607, loading a multi-core mirror image of the terminal;
at S608, performing a security verification on the version of the operating system of the terminal;
at S609, initializing a high-pass platform of the terminal;
at S610, initializing a kernel of the terminal;
at S611, after initializing the kernel of the terminal, enabling a preset timer in the kernel of the terminal;
at S612, calling the power-off charging UI built in the terminal;
at S613, using the timer to periodically obtain the current charging state and the current electric quantity of the battery of the terminal from a charging chip and a voltameter chip of the battery of the terminal, and using the current charging state and the current electric quantity of the battery of the terminal to refresh the power-off charging UI built in the terminal;
at S614, initializing the user space of the terminal.

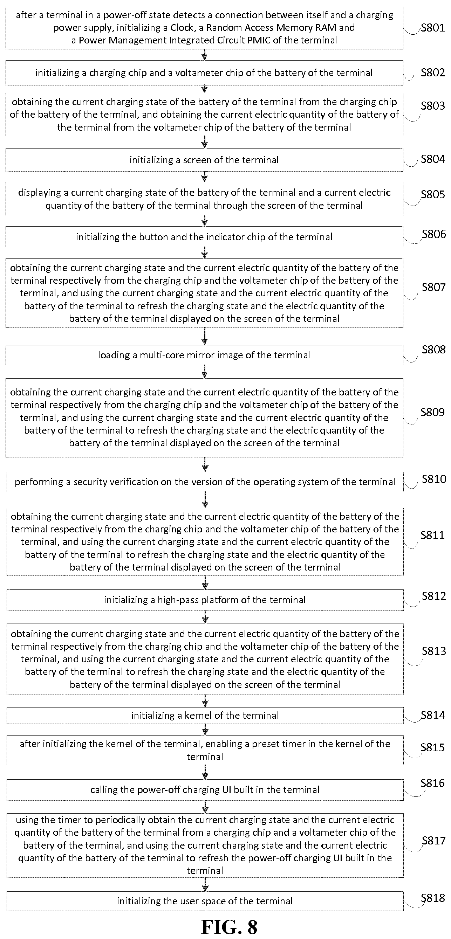

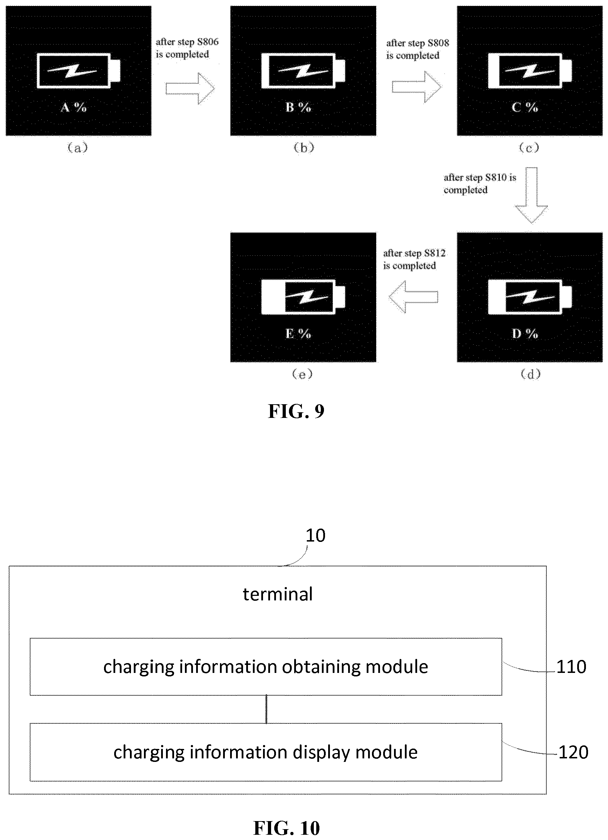

It should be noted that the time taken to perform step S606 to step S609 is relatively short (generally about 2 seconds), and thus when the terminal performs step S606 to step S609, the screen of the terminal can always display the charging state and the electric quantity of the battery of the terminal obtained at step S603; for example, the screen of the terminal can always keep the picture as shown in Fig. 7. However, in order to more truly reflect the current charging state and the current electric quantity of the battery of the terminal, when performing steps S606 to step S609, it is also possible to periodically refresh the charging state and the electric quantity of the battery of the terminal (i.e. the battery charging information of the terminal) displayed on the screen of the terminal in a timing manner. For example, it takes 0.5 seconds to implement step S606 to step S609 respectively, and thus the refresh cycle can be set to 0.5 seconds, that is, the current charging state and the current electric quantity of the battery of the terminal are obtained from the charging chip and the voltameter chip of the battery of the terminal every 0.5 seconds, and the obtained current charging state and the current electric quantity of the battery of the terminal are used to refresh the charging information displayed on the screen of the terminal. Optionally, the implementation process as shown in Fig. 8 is as follows:
at S801, after a terminal in a power-off state detects a connection between itself and a charging power supply, initializing a Clock, a Random Access Memory RAM and a Power Management Integrated Circuit PMIC of the terminal;
at S802, initializing a charging chip and a voltameter chip of the battery of the terminal;
at S803, obtaining the current charging state of the battery of the terminal from the charging chip of the battery of the terminal, and obtaining the current electric quantity of the battery of the terminal from the voltameter chip of the battery of the terminal;
at S804, initializing a screen of the terminal;
at S805, displaying a current charging state of the battery of the terminal and a current electric quantity of the battery of the terminal through the screen of the terminal;
here, as shown in Fig. 9(a), the screen of the terminal may display the current charging state and the current electric quantity of the battery of the terminal through a power-off charging icon, and A% in Fig. 9(a) indicates the current electric quantity of the battery of the terminal;
at S806, initializing the button and the indicator chip of the terminal;
at S807, obtaining the current charging state and the current electric quantity of the battery of the terminal respectively from the charging chip and the voltameter chip of the battery of the terminal, and using the current charging state and the current electric quantity of the battery of the terminal to refresh the charging state and the electric quantity of the battery of the terminal displayed on the screen of the terminal;
here, it usually takes 0.5 seconds to implement step S806, and thus after the step S806 is performed, it is possible to re-obtain the current charging state and the current electric quantity of the battery of the terminal, and to refresh the charging state and the current electric quantity of the battery of the terminal displayed on the screen of the terminal; the result of the refreshing can be seen in Fig. 9(b), and as can be seen from Fig. 9(b), the electric quantity of the battery of the terminal at this time is B%;
at S808, loading a multi-core mirror image of the terminal;
at S809, obtaining the current charging state and the current electric quantity of the battery of the terminal respectively from the charging chip and the voltameter chip of the battery of the terminal, and using the current charging state and the current electric quantity of the battery of the terminal to refresh the charging state and the electric quantity of the battery of the terminal displayed on the screen of the terminal;
likewise, it also takes 0.5 seconds to implement step S808, and thus after the step S808 is performed, it is possible to re-obtain the current charging state and the current electric quantity of the battery of the terminal, and to refresh the picture shown in Fig. 9(b); the result of the refreshing can be seen in Fig. 9(c), and as can be seen from Fig. 9(c), the electric quantity of the battery of the terminal at this time is C%;
at S810, performing a security verification on the version of the operating system of the terminal;
at S811, obtaining the current charging state and the current electric quantity of the battery of the terminal respectively from the charging chip and the voltameter chip of the battery of the terminal, and using the current charging state and the current electric quantity of the battery of the terminal to refresh the charging state and the electric quantity of the battery of the terminal displayed on the screen of the terminal;
likewise, after the step S810 is performed, it is possible to re-obtain the current charging state and the current electric quantity of the battery of the terminal, and to refresh the picture shown in Fig. 9(c); the result of the refreshing can be seen in Fig. 9(d), and as can be seen from Fig. 9(d), the electric quantity of the battery of the terminal at this time is D%;
at S812, initializing a high-pass platform of the terminal;
at S813, obtaining the current charging state and the current electric quantity of the battery of the terminal respectively from the charging chip and the voltameter chip of the battery of the terminal, and using the current charging state and the current electric quantity of the battery of the terminal to refresh the charging state and the electric quantity of the battery of the terminal displayed on the screen of the terminal;
likewise, after the step S812 is performed, it is possible to re-obtain the current charging state and the current electric quantity of the battery of the terminal, and to refresh the picture shown in Fig. 9(d); the result of the refreshing can be seen in Fig. 9(e), and as can be seen from Fig. 9(e), the electric quantity of the battery of the terminal at this time is E%; as can be seen from Fig. 9, as the charging time is prolonged, the electric quantity of the battery of the terminal is gradually increased.
at S814, initializing a kernel of the terminal;
at S815, after initializing the kernel of the terminal, enabling a preset timer in the kernel of the terminal;
at S816, calling the power-off charging UI built in the terminal;
at S817, using the timer to periodically obtain the current charging state and the current electric quantity of the battery of the terminal from a charging chip and a voltameter chip of the battery of the terminal, and using the current charging state and the current electric quantity of the battery of the terminal to refresh the power-off charging UI built in the terminal;
at S818, initializing the user space of the terminal.

It can be seen from the above implementation process that the embodiment of the present disclosure provides a method for displaying charging information, in which a terminal in a power-off state, after initializing a Clock, a RAM and a PMIC, initializes a power management of the battery of the terminal and a screen of the terminal immediately, and further displays the current battery charging information of the terminal through the screen of the terminal, thus greatly shortening the time of the terminal from connecting to the charging power supply to displaying the current battery charging information of the terminal.

The embodiment of the present disclosure further provides a terminal 10 as shown in Fig. 10, and as can be seen from the figure, the terminal 10 can comprise: a charging information obtaining module 110 and a charging information display module 120, wherein
the charging information obtaining module 110 is configured to obtain current battery charging information of the terminal;
the charging information display module 120 is configured to display the current battery charging information of the terminal according to a preset display strategy, which is used for displaying the current battery charging information of the terminal before an operating system of the terminal is initialized.

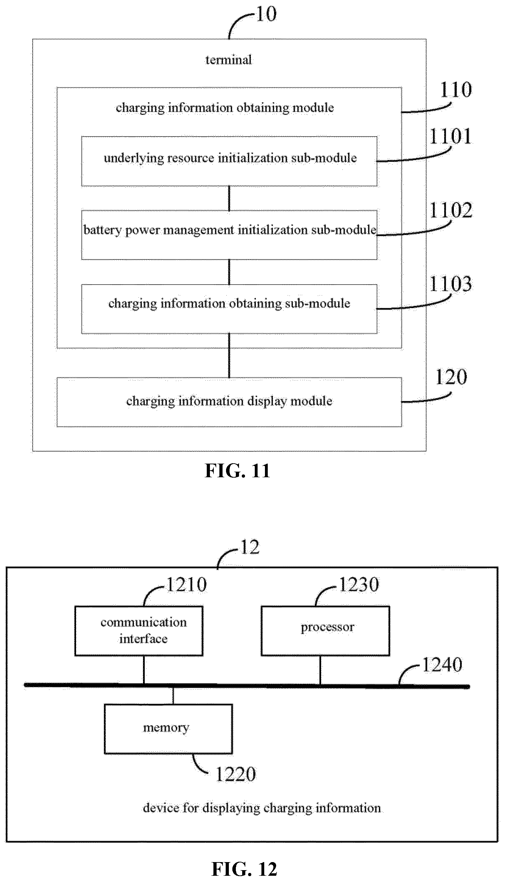

In the above solution, as shown in Fig. 11, said charging information obtaining module 110 comprises: an underlying resource initialization sub-module 1101, a battery power management initialization sub-module 1102 and a charging information obtaining sub-module 1103, wherein
the underlying resource initialization sub-module 1101 is configured to initialize an underlying resource of the terminal;
the battery power management initialization sub-module 1102 is configured to initialize a power management of the battery of the terminal after initializing the underlying resource of the terminal;
the charging information obtaining sub-module 1103 is configured to obtain the battery charging information of the terminal from the power management of the battery of the terminal after initializing the power management of the battery of the terminal.

In the above solution, said underlying resource initialization sub-module 1101 is configured to:
initialize a Clock, a Random Access Memory RAM and a Power Management Integrated Circuit PMIC of the terminal.

In the above solution, said battery power management initialization sub-module 1102 is configured to:
initialize a charging chip and a voltameter chip of the battery of the terminal.

In the above solution, said current charging information of the terminal comprises a current charging state and a current electric quantity of the battery of the terminal;
correspondingly, said charging information obtaining sub-module 1103 is configured to:
obtain the current charging state of the battery of the terminal from the charging chip of the battery of the terminal, and obtain the current electric quantity of the battery of the terminal from the voltameter chip of the battery of the terminal.

In the above solution, said charging information display module 120 is configured to:
initialize a screen of the terminal;
after initializing the screen of the terminal, display the battery charging information of the terminal through the screen of the terminal, and periodically refresh the battery charging information of the terminal displayed on the screen of the terminal.

In addition, respective functional modules in this embodiment may be integrated into one processing unit, or each unit may exist physically separately, or two or more units may be integrated into one unit. The above integrated units can be implemented either in the form of hardware or in the form of software functional modules.

The integrated units can be stored in a computer readable storage medium if it is implemented in the form of a software functional module and is not sold or used as a stand-alone product. Based on such understanding, the essential part or the part contributing to the prior art in the technical solution of the embodiment, or all or part of the technical solution can be embodied in the form of a software product; the computer software product is stored in a storage medium, including several instructions to make a computer equipment (which can be a personal computer, a server, or a network device, etc.) or a processor to perform all or part of the steps of the method described in this embodiment. The foregoing storage medium includes: a U disk, a mobile hard disk, a Read Only Memory (ROM), a Random Access Memory (RAM), a magnetic disk, or an optical disk, and other various media capable of storing program codes.

Specifically, the computer program instructions corresponding to the method for displaying charging information in the embodiment may be stored on a storage medium such as an optical disk, a hard disk, a U disk, or the like, and when the computer program instructions corresponding to a method for displaying charging information in the storage medium are read or executed by an electronic device, the following steps are included:
after a terminal in a power-off state detects a connection between itself and a charging power supply, obtaining the battery charging information of the terminal;
displaying the battery charging information of the terminal according to a preset display strategy, which is used for displaying the battery charging information of the terminal before an operating system of the terminal is initialized.

Optionally, the steps stored in the storage medium: said obtaining battery charging information of the terminal comprises:
initializing an underlying resource of the terminal;
after initializing the underlying resource of the terminal, initializing a power management of the battery of the terminal;
after initializing the power management of the battery of the terminal, obtaining the battery charging information of the terminal from the power management of the battery of the terminal.

Optionally, the steps stored in the storage medium: said initializing an underlying resource of the terminal comprises:
initializing a Clock, a Random Access Memory RAM and a Power Management Integrated Circuit PMIC of the terminal.

Optionally, the steps stored in the storage medium: said initializing a power management of the battery of the terminal comprises:
initializing a charging chip and a voltameter chip of the battery of the terminal.

Optionally, the steps stored in the storage medium: said battery charging information of the terminal comprises a current charging state and a current electric quantity of the battery of the terminal;
correspondingly, said obtaining the battery charging information of the terminal from the power management of the battery of the terminal comprises:
obtaining the current charging state of the battery of the terminal from the charging chip of the battery of the terminal, and obtaining the current electric quantity of the battery of the terminal from the voltameter chip of the battery of the terminal.

Optionally, the steps stored in the storage medium: said displaying the battery charging information of the terminal according to a preset display strategy comprises:
initializing a screen of the terminal;
after initializing the screen of the terminal, displaying the battery charging information of the terminal through the screen of the terminal, and periodically refreshing the battery charging information of the terminal displayed on the screen of the terminal.

An embodiment of the present disclosure provides a device 12 for displaying charging information, as shown in Fig. 12, which may comprise: a communication interface 1210, a memory 1220, a processor 1230, and a bus 1240, wherein
the bus 1240 is configured to connect the communication interface 1210, the processor 1230, and the memory 1220 and intercommunication between the devices;
the communication interface 1210 is configured to perform data transmission with an external network element;
the memory 1220 is configured to store instructions and data;
the processor 1230 is configured to execute the instruction to: obtain the current battery charging information of the terminal after a terminal in a power-off state detects a connection between itself and a charging power supply;
and to display the current battery charging information of the terminal according to a preset display strategy, which is used for displaying the current battery charging information of the terminal before an operating system of the terminal is initialized.

In practical applications, the above memory 1220 can be a volatile memory, such as a Random-Access Memory (RAM); or a non-volatile memory, such as a Read-Only Memory (ROM), a flash memory, a Hard Disk Drive (HDD), or a Solid-State Drive (SSD); or a combination of the above types of memories, and provides instructions and data to the processor 1230.

The above processor 1230 can be at least one of an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a controller, a microcontroller, and a microprocessor. It is to be understood that, for different devices, the electronic devices for implementing the aforesaid processor functions may also be others, which are not specifically limited in the embodiments of the present disclosure.

Exemplarily, the processor 1230 can be configured to:
initialize an underlying resource of the terminal;
and initialize a power management of the battery of the terminal after initializing the underlying resource of the terminal;
and obtain the battery charging information of the terminal from the power management of the battery of the terminal after initializing the power management of the battery of the terminal.

Exemplarily, the processor 1230 can be configured to:
initialize a Clock, a Random Access Memory RAM and a Power Management Integrated Circuit PMIC of the terminal.

Exemplarily, the processor 1230 can be configured to:
initialize a charging chip and a voltameter chip of the battery of the terminal.

Exemplarily, the processor 1230 can be configured to:
obtain the current charging state of the battery of the terminal from the charging chip of the battery of the terminal, and obtain the current electric quantity of the battery of the terminal from the voltameter chip of the battery of the terminal.

Exemplarily, the processor 1230 can be configured to:
initialize a screen of the terminal;
and after initializing the screen of the terminal, display the battery charging information of the terminal through the screen of the terminal, and periodically refresh the battery charging information of the terminal displayed on the screen of the terminal.

Those of ordinary skill in the art may understand that the functional modules/units in all or some of the steps, systems, and devices in the method disclosed above can be implemented as software, firmware, hardware and an appropriate combination thereof. In the hardware implementation, the division between functional modules/units mentioned in the above description does not necessarily correspond to the division of physical units; for example, one physical component may have multiple functions, or one function or step can be executed by several physical components in cooperation. Some or all of the components may be implemented as software executed by a processor, such as a digital signal processor or a microprocessor, or may be implemented as hardware, or may be implemented as an integrated circuit, such as an application specific integrated circuit. Such software may be distributed on computer readable media, and the computer readable media may comprise computer storage media (or non-transitory media) and communication media (or transitory media). As is well known to those of ordinary skill in the art, the term computer storage medium comprises volatile and nonvolatile, removable and non-removable media implemented in any method or technology for storing information (such as computer readable instructions, data structures, program modules, or other data). The computer storage medium includes, but is not limited to, RAM, ROM, EEPROM, flash memory or other memory technology, CD-ROM, Digital Versatile Disc (DVD) or other optical disc storage, magnetic cartridge, magnetic tape, magnetic disk storage or other magnetic storage device, or any other medium which can be used to store desired information and can be accessed by a computer. Moreover, it is well known to those skilled in the art that communication media usually include computer readable instructions, data structures, program modules, or other data in a modulated data signal such as carrier or other transmission mechanisms, and may include any information delivery media. The present disclosure is described with reference to a flow chart and/or a block diagram of a method, a device (system), and a computer program product according to embodiments of the present disclosure. It should be understood that each flow and/or block in the flow chart and/or the block diagram, as well as a combination of the flow and/or block in the flow chart and/or block diagram, can be implemented by computer program instructions. These computer program instructions may be provided to a processor of a general purpose computer, a special purpose computer, an embedded processor, or other programmable data processing device to produce a machine, such that the instructions executed by the processor of the computer or other programmable data processing device produce a device for implementing the functions specified in one or more flows of the flow chart and/or one or more blocks of the block diagram.

These computer program instructions can also be stored in a computer readable memory that can direct a computer or other programmable data processing device to operate in a particular manner, such that the instructions stored in the computer readable memory produce an article of manufacture comprising the instruction device, and the instruction device implements the functions specified in one or more flows of the flow chart and/or one or more blocks of the block diagram.

These computer program instructions can also be loaded onto a computer or other programmable data processing device such that a series of operational steps are performed on a computer or other programmable device to produce computer-implemented processing, and thereby the instructions executed on the computer or other programmable device provide the steps for implementing the functions specified in one or more flows of the flow chart and/or one or more blocks of the block diagram.

The above descriptions are only optional embodiments of the present disclosure, and are not intended to limit the protection scope of the present disclosure.

### Industrial Applicability

The embodiments of the present disclosure can display the battery charging information of the terminal according to a preset display strategy before initializing the operating system of the terminal, so that a terminal in a power-off state does not need to wait until the power-off charging UI built in the terminal is called before displaying the battery charging information of the terminal, thus greatly shortening the time of the terminal from connecting to the charging power supply to displaying the battery charging information of the terminal.

## Claims

1. A method for displaying charging information, the method comprising:
after a terminal in a power-off state detects a connection between itself and a charging power supply, obtaining battery charging information of the terminal (S410);
displaying the battery charging information of the terminal according to a preset display strategy, which is used for displaying the battery charging information of the terminal before an operating system of the terminal is initialized (S420).

2. The method according to claim 1, wherein said obtaining battery charging information of the terminal comprises:
initializing an underlying resource of the terminal;
after initializing the underlying resource of the terminal, initializing a power management of the battery of the terminal;
after initializing the power management of the battery of the terminal, obtaining the battery charging information of the terminal from the power management of the battery of the terminal.

3. The method according to claim 2, wherein said initializing an underlying resource of the terminal comprises:
initializing a Clock, a Random Access Memory RAM and a Power Management Integrated Circuit PMIC of the terminal.

4. The method according to claim 2, wherein said initializing a power management of the battery of the terminal comprises:
initializing a charging chip and a voltameter chip of the battery of the terminal.

5. The method according to claim 2 or 4, wherein said the battery charging information of the terminal comprises a current charging state and a current electric quantity of the battery of the terminal;
correspondingly, said obtaining the battery charging information of the terminal from the power management of the battery of the terminal comprises:
obtaining the current charging state of the battery of the terminal from the charging chip of the battery of the terminal, and obtaining the current electric quantity of the battery of the terminal from the voltameter chip of the battery of the terminal.

6. The method according to claim 1 or 2, wherein said displaying the battery charging information of the terminal according to a preset display strategy comprises:
initializing a screen of the terminal;
after initializing the screen of the terminal, displaying the battery charging information of the terminal through the screen of the terminal, and periodically refreshing the battery charging information of the terminal displayed on the screen of the terminal.

7. A terminal (10), the terminal (10) comprising: a charging information obtaining module (110) and a charging information display module (120), wherein
the charging information obtaining module (110) is configured to obtain battery charging information of the terminal;
the charging information display module (120) is configured to display the battery charging information of the terminal according to a preset display strategy, which is used for displaying the battery charging information of the terminal before an operating system of the terminal is initialized.

8. The terminal (10) according to claim 7, wherein said charging information obtaining module (110) comprises: an underlying resource initialization sub-module (1101), a battery power management initialization sub-module (1102) and a charging information obtaining sub-module (1103), wherein
the underlying resource initialization sub-module (1101) is configured to initialize an underlying resource of the terminal;
the battery power management initialization sub-module (1102) is configured to initialize a power management of the battery of the terminal after initializing the underlying resource of the terminal;
the charging information obtaining sub-module (1103) is configured to obtain the battery charging information of the terminal from the power management of the battery of the terminal after initializing the power management of the battery of the terminal.

9. The terminal (10) according to claim 8, wherein said underlying resource initialization sub-module (1101) is configured to:
initialize a Clock, a Random Access Memory RAM and a Power Management Integrated Circuit PMIC of the terminal.

10. The terminal (10) according to claim 8, wherein said battery power management initialization sub-module (1102) is configured to:
initialize a charging chip and a voltameter chip of the battery of the terminal.

11. The terminal (10) according to claim 8 or 10, wherein said battery charging information of the terminal comprises a current charging state and a current electric quantity of the battery of the terminal;
correspondingly, said charging information obtaining sub-module (1103) is configured to:
obtain the current charging state of the battery of the terminal from the charging chip of the battery of the terminal, and obtain the current electric quantity of the battery of the terminal from the voltameter chip of the battery of the terminal.

12. The terminal (10) according to claim 7 or 8, wherein said charging information display module (120) is configured to:
initialize a screen of the terminal;
after initializing the screen of the terminal, display the battery charging information of the terminal through the screen of the terminal, and periodically refresh the battery charging information of the terminal displayed on the screen of the terminal.

13. A computer readable storage medium storing computer executable instructions that, when executed by a processor, implement the method according to any of claims 1 to 6.
